# EUROPEAN PATENT SPECIFICATION

(11) **EP 1 523 117 B1**
(45) Date of publication and mention of the grant of the patent: **11.07.2007**
(21) Application number: 03292497.9
(22) Date of filing: 09.10.2003
(51) Int. Cl.: H04J 3/14, H04J 3/16

(54) **Method and frame for "in band" path failure detection and localization within an SDH/SONET network domain**
Verfahren und Rahmensignal zur Inband-Erkennung und -Lokalisierung eines Path-Ausfalls in einer SDH/SONET Netzwerkdomäne
Procédé et trame pour la détéction et la localisation dans la bande d'une faute de chemin dans un domaine de reseau SDH/SONET

(43) Date of publication of application: 13.04.2005
(73) Proprietor: Alcatel Lucent, 75008 Paris (FR)
(72) Inventor: Bellato, Alberto, 20044 Bernareggio (Milano) (IT); Sestito, Vincenzo, 20127 Milano (IT); Grandi, Pietro Vittorio, 20139 Milano (IT)
(74) Representative: Menzietti, Domenico

(56) References cited:
- EP-A- 1 014 603
- US-A- 5 636 203
- US-A- 6 141 320
- US-B1- 6 366 556
- US-B1- 6 411 598
- US-B1- 6 452 906

## Description

The present invention relates to SDH/SONET telecommunication networks and in particular to a method and corresponding frame for providing "in band" path failure detection and localization. In other words, the present invention relates to a path failure detection and localization mechanism having a logic that is distributed in the various nodes of a SDH/SONET network.

The deregulation occurred in the last years on telecommunication networks has frequently led to a multi-operator environment, where traffic may be carried through before being terminated by an actual user.

Thus, a generic path may "pass-through" different network domains with, consequently, the need to be managed and/or to be protected by each operator.

Specifically, the need to discriminate the occurrence of a possible failure within/without a domain, so as to localize the fault detected is a key issue for properly activating any method of traffic restoration/protection.

A known mechanism for activating monitoring (and also protection) functionalities in an SDH network domain is the so-called tandem connection (TC). Such a mechanism has been already standardized under ITU-T G.707 (see annex C). A Tandem Connection is defined as a group of VC-ns which are transported and maintained together through one or more tandem line systems, with the constituent VC payload capacities unaltered. Note that in support of the layered overhead approach used in SDH, the Tandem Connection sub-layer falls between the multiplex section and path overhead layers (i.e. the original Regenerator section, Multiplex section, and Path functional overhead layering evolves to Regenerator section, Multiplex section, Tandem Connection and Path layers).

The Tandem Connection mechanism thus utilizes proper bytes of POH different from those normally used for end-to-end monitoring (typically B3, C2, and J1 bytes for VC4/VC3 paths). The Tandem Connection has been typically developed for serially arranged different operator network domains, namely for network domains of different telecom operators that are serially passed-through by a certain path.

In such a scenario (serially arranged different operator network domains) the problem with the standard Tandem Connection mechanism is related to both maintenance and service level agreement operations affecting a path. In case of claims from a final user, the operator finally charging such a final user can not understand which of the intermediate serially arranged operators has provided a fault-affected network resulting in a failured path.

In order to avoid such an inconvenience, the Standard has provided for a further byte, N1 byte of VC3/VC4 POH that can be acceded by the intermediate telecom operator. An intermediate operator, at the input of a path in its network domain, writes any possible error coding values and external alarm conditions in the N1 byte and transports such information at the egress end node of its network, namely the path end node.

Thus, the known Tandem Connection mechanism is rather effective in case of serially arranged different operator network domains but it is completely uneffective and unusable in case of nested network domains. In the first case, a certain path runs from an ingress end node to an egress end node of a first network domain and then passes through, serially, a second network domain, a third network domain, ... In the second case, a certain path runs from an ingress end node to an egress end node of a main network domain passing through the ingress nodes of the first, the second ... and the n-th intermediate network domains and then through the egress nodes of the n-th, ..., the second and the first intermediate network domains. It will become clear to the man skilled in the art that if an inner telecom operator activates a Tandem Connection for monitoring its domain, such an operation squelches any Tandem Connection possibly activated by an operator that is external to it. Thus, in other words, the TC activated by the main operator becomes useless because the nested operators have used the same bytes for writing information related to their own network status.

Thus, the Tandem Connection functionality conceived within SDH technology fits a network topology where different operators manage intermediate domains serially connected: in these domains each operator can access the N1 byte of VC3/VC4 POH of the Higher Order VC (HOVC) for internal path monitoring, terminating the functionality at the NE's ingressing-egressing its domain.

Fault localization is currently supported through control plane (DCC) by centralized and distributed management. In a SDH or SONET network, all the alarm information are notified by the various network elements to the manager through the control plane. Thus, the DCC bytes (D1 - D3 in SDH-RSOH or Sonet-Section Overhead and D4 - D12 in SDH-MSOH or Sonet-Line Overhead) are used as communication channels for transmitting such information and form the supervision / control channel. In turn, the supervision / control channel is separated from the communication channel or data plane (situations could happen wherein the control plane is affected by a failure and the data plane is not or *vice versa*).

Fault localization through control plane is rather slow due to the different functional layers to be processed at each Network Element and, consequently, the possible update of network conditions due to a restoration process becomes critical in terms of response time for a fast re-allocation of available resources.

Finally, just for the purpose of providing a complete description, it should be said that in the OTH optical layer, the nested Tandem Connection functionality is defined. Whilst in the SDH domain a single byte N1 is defined (as said above), in the OTH case, six Tandem Connection N1-like bytes are provided, each byte being for a single level. Thus, six different information could be written in the same path and six parallel processes could be elaborated. Every nested telecom operator is allowed to accede to one only of the dedicated fields. In any case, the scope of the present patent application does not extend to the optical layer.

US 6,366,556 discloses methods and apparatus for providing virtual rings in SONET networks. By using an unused byte in the SONET path overhead, in conjunction with multiframe operation, restoration is performed at the sub-network connection layer or path layer to provide a finer granularity of protection which provides more efficient use of bandwidth.

US 6,411,598 discloses a signal conversion for fault isolation. To isolate a fault in a network adaptable for distributed restoration of disrupted traffic, each node of the network is provisioned with the functionality of being able to detect an incoming alarm signal and convert such alarm signal into a non-alarm signal with an embedded message for further propagation to nodes downstream thereof. Thus, the custodial nodes that first detected the alarm resulting from the malfunction would convert the alarm signal into a non-alarm signal and propagate the non-alarm signal to their respective downstream nodes. By thus changing the alarm signal into a non-alarm signal by the nodes that first detect the alarm, the management of the network ensures that the alarm is detected by only two adjacent nodes, thereby masking the fault isolation quick and simple.

US 5,636,203 discloses a method and system for identifying fault locations in a communications network. All nodes on a malfunctioned communications circuit of a communications network are enabled to identify the location of the fault causing the circuit malfunction. Upon detecting an incoming signal impairment on the circuit, each node on the circuit first assumes that the failure is on the segment of the circuit immediately upstream thereof, and accordingly sends an identifier of that fault location to its downstream nodes.

In view of the above, the Applicant has perceived the need to provide a method and corresponding frame for "in band" higher order path failure detection and localization.

The problem to solve by the present invention could be seen in providing an embedded communication channel, namely a channel within the bandwidth of a synchronous SDH/SONET signal, allowing for failure detection, failure localization and possibly providing information about the need to start a restoration process.

According to the present invention, a proper byte from POH is used, preferably K3 byte is used for SDH applications, Z4 byte is used for SONET applications.

According to the present invention, at least bits 5 and 6 of K3/Z4 are used for loading the following information: RDI (Remote Defect Indication) and "External failure / Internal failure".

The problem is solved by a method according to claim 1, a frame according to claim 4, a network element according to claim 6, and a network according to claim 7.

Further implementations of the invention are disclosed in the depending claims.

According to the present invention, at least bits 5 and 6 of K3/Z4 are used for loading the following information: RDI (Remote Defect Indication) and "External failure / Internal failure".

The present invention will become fully clear after reading the following detailed description, to be given by way of example only and not with the object of limiting it, having reference to the attached sheets of drawings, wherein:
- Figure 1 is a diagrammatic representation of three serially arranged different network domains;
- Figures 2a and 2b are diagrammatic representations of nested network domains;
- Figure 3a is a diagrammatic representation of a VC-4 frame;
- Figure 3b is a diagrammatic representation of K3 byte according to the present invention;
- Figures 4-8 are diagrammatic representations of possible scenarios that are managed by the basic mechanism according to the present invention; and
- Figures 9-14 are diagrammatic representations of possible scenarios that are managed by the improved mechanism according to the present invention.

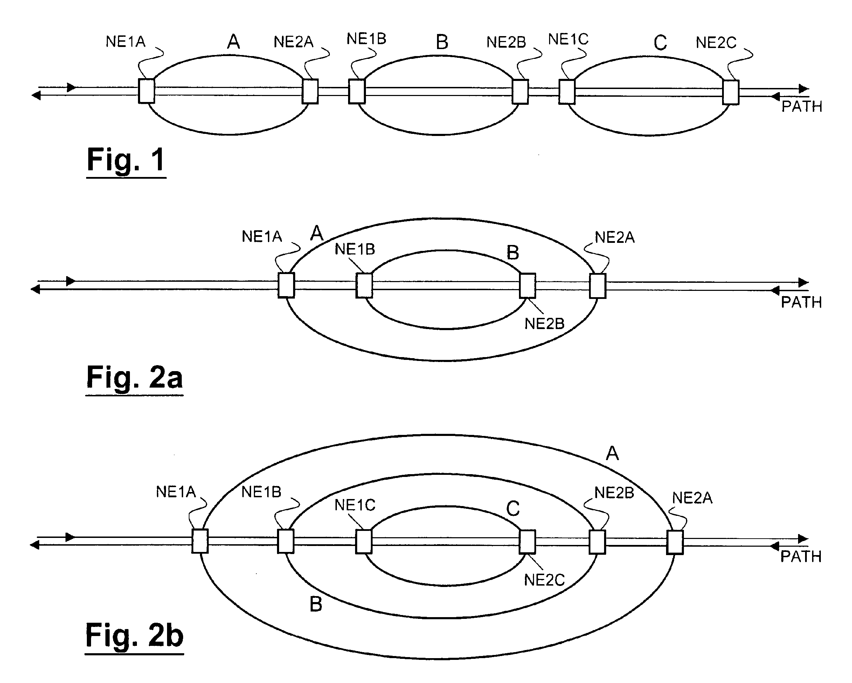

Figure 1 shows, in a schematic manner, an example of three serially arranged different network domains that are passed through by a certain bi-directional path. Whilst the number of paths in a network could be of the order of thousands, only one is represented for clarity reasons. Furthermore, only the end nodes of the passed-through network domains are represented for the very same reason. The same applies to the other Figures 2a and 2b.

The path originates in end node NE1A and terminates in end node NE2C of the network domain C. From NE1A to NE2C it passed through the end nodes NE2A, NE1B, NE2B, NE1C of the serially arranged network domains B and C, respectively. In a similar network arrangement, the Tandem Connection mechanism operates sufficiently effectively.

The standard TC mechanism is not operable in a configuration of nested network domains as in Figures 2a and 2b. According to the arrangement of Figure 2a, a path (originating in end node NE1A and terminating in end node NE2A of network domain A) passes through the end nodes NE1B and NE2B. The end nodes belonging to network domain B (NEB1, NEB2), have to forward N1 byte generated each other by NEA1 and NEA2, transparently across the domain: thus, no further Tandem Connection may be activated within domain B.

In the arrangement of Figure 2b, the situation is still more complicated and no TC can be activated within domains B and C. In fact, each intermediate end node NE1B, NE1C, NE2B and NE2C rewrites status information in the same byte N1.

The present invention is applicable both in the first and in the second configurations, it does not replace the TC mechanism but it works independently from it.

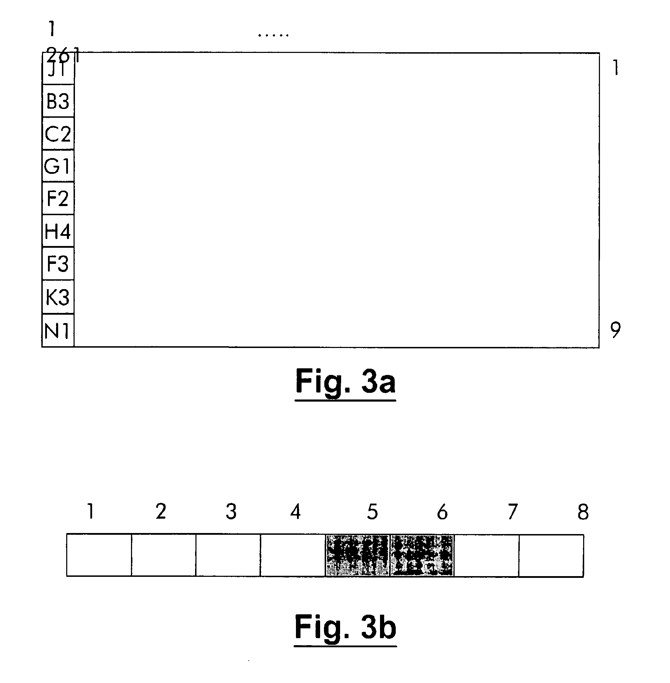

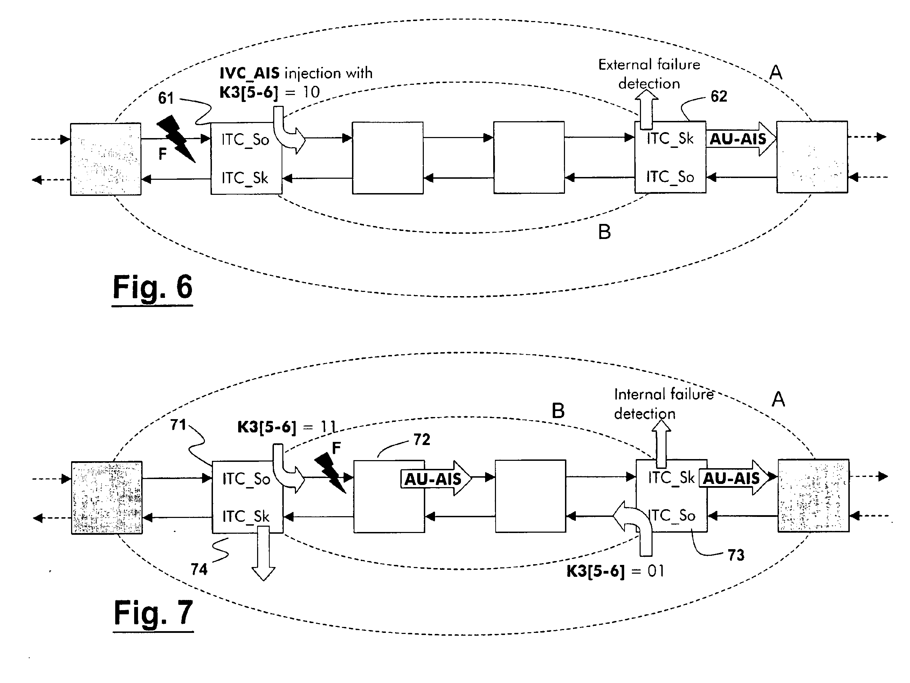

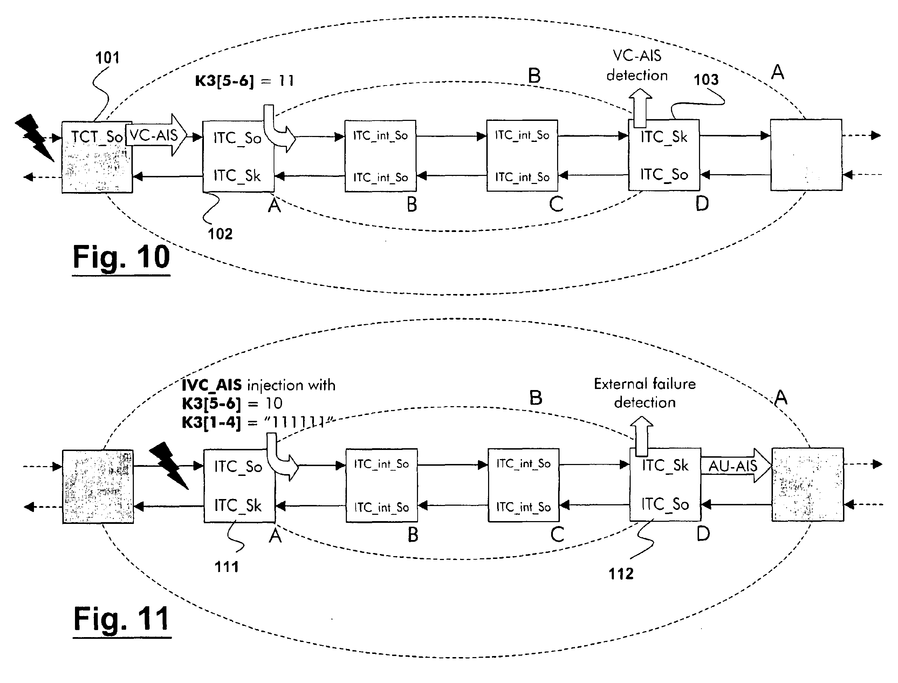

It is known that the SDH-VC-4-Xc/VC-4/VC-3 POH consists of 9 bytes denoted J1, B3, C2, G1, F2, H4, F3, K3 and N1 (see Figures 11-1, 7-3 and 7-4 of ITU-T G.707 and Figure 3a of the present application). These bytes are classified as follows:
- Bytes or bits used for end-to-end communication with independent payload function: J1, B3, C2, G1, K3 (b1-b4).
- Payload type specific bytes: H4, F2, F3.
- Bits reserved for future international standardization: K3 (b5-b8).
- Byte which can be overwritten in an operator domain (without affecting the end-to-end performance monitoring facility of the byte B3): N1. According to ITU-T G. 707, the Automatic Protection Switching (APS) channel (bits b1-b4 of K3) are allocated for APS signalling for protection at the VC-4/3 path levels. Bits 7 and 8 of K3 are reserved for a higher order path data link. The ITU-T G. 707 further states that bits b5-b6 of K3 are spare and are allocated for future use. These bits have no defined value and the receiver is required to ignore their content.

The present invention obtains the result of discriminating a path failure occurred inside a domain rather then outside. The present invention achieves such a result by using a proper encoding of K3 byte of VC4/VC3 POH (for SDH technology) or Z4 byte of STS1 POH (for SONET technology).

With reference, for instance, to Fig. 2a, for any path passing-through both domains, the NE's ingressing - egressing Domain A, (i.e. NEA1 , NEA2) are supposed to handle Tandem Connection functionality for the monitoring and, possibly the protection of the interested path.

For any HO path passing-through both domains, NE's 'ingressing - egressing' Domain A, (i.e. NE 1 , NE n) are supposed to handle Tandem Connection functionality for the monitoring and, possibly the protection of the interested path.

In particular, within the nested domains, the K3/Z4 byte is managed so as to encode specific indication for Near End / Far End fault detection in bits 5-6. Specifically, according to a preferred embodiment of the invention, bit 5 is used for indicating RDI (Remote Defect Indication) and bit 6 is used for indicating "External failure / Internal failure". It should be understood that the scope of the present invention equally covers a different (for instance the opposite) use of bits 5 and 6 of byte K3/Z4.

As said above, this solution is aligned with current SDH/SONET standard recommendations considering those bits respectively "for future use" and "for future growth".

Besides, this solution is compatible with the handling of possible path/trail protection schemes within the domain, based on protocol exchange message in bits 1-4 of K3 byte, as already specified by ITU-T G. 707/G.841 standard recommendations.

A further issue that an operator might want approach is the fault localization: then, not only the capability to distinguish Internal /External failure (supported by bits 5-6) will be provided, but also the possibility to localize the span (or link) which is fault affected. This feature becomes pretty attractive when path restoration methods (both centralized and distributed) are used within the domain: fault localization allows the operator to re-allocate efficiently available resources of connectivity.

Specifically, when path restoration is used for traffic survivability, a path protection scheme based on protocol is very unlikely to be used.

Then, bits 1-4 of K3/Z4 byte can be used for encoding a node identifier indicating the network element, inside the domain, detecting the path failure. This information should be forwarded and backwarded (RDI) to the NE's ingressing / egressing that domain and then to the manager.

The need to support fault localization on networks with more than 16 nodes, could be matched by multi-framing the indication of node identifier on two or more consecutive K3 byte (i.e. 8 bits or more).

Thus, ingress and egress end nodes to a network domain to be monitored identify an Internal TCM sublayer. Two new atomic functions are defined for sourcing and sinking the Internal Tandem Connection (ITC) according to the present invention: ITC-TT_So and ITC-TT_Sk. Furthermore, a new maintenance signal is defined for maintenance operations within the ITC sublayer: Internal VC-AIS (IVC-AIS). Indeed, IVC-AIS is similar to VC-AIS, with the exception that also K3 byte of POH is valid and is not all "1"s as in the known VC-AIS.

According to the present invention, the management of the internal TCM sublayer is performed only by ingress and egress nodes of main resources and no action is performed by the nodes intermediate to the network domain.

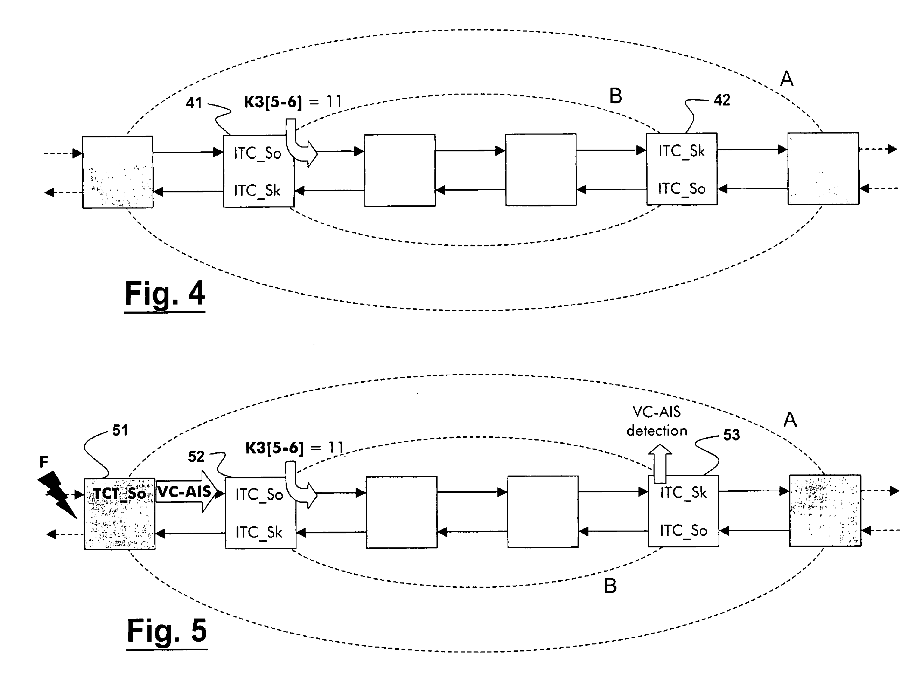

A possible failure coding according to the present invention is given, by way of example only, in the following Table 1 and will be explained through the examples of Figures 4-8.

**Table 1**

| **Signal Status** | **Injected Maintenance Signal** | **K3 [5-6] value** | **Egress Node Consequent Action** | **Protection Trigger?** |
|---|---|---|---|---|
| 1 | No Consequent Action on payload | 11 | No Consequent action | NO |
| 2 | **IVC-AIS** injected in Ingress Node | 10 | **AU-AIS** | NO |
| 3 | **AU-AIS** injected in intermediate node | NA | **AU-AIS** | YES |
| 4 | No consequent action on payload | 01 | No Consequent Action | YES |
| 5 | **IVC-AIS** injected in ingress node | 00 | **AU-AIS** | YES |

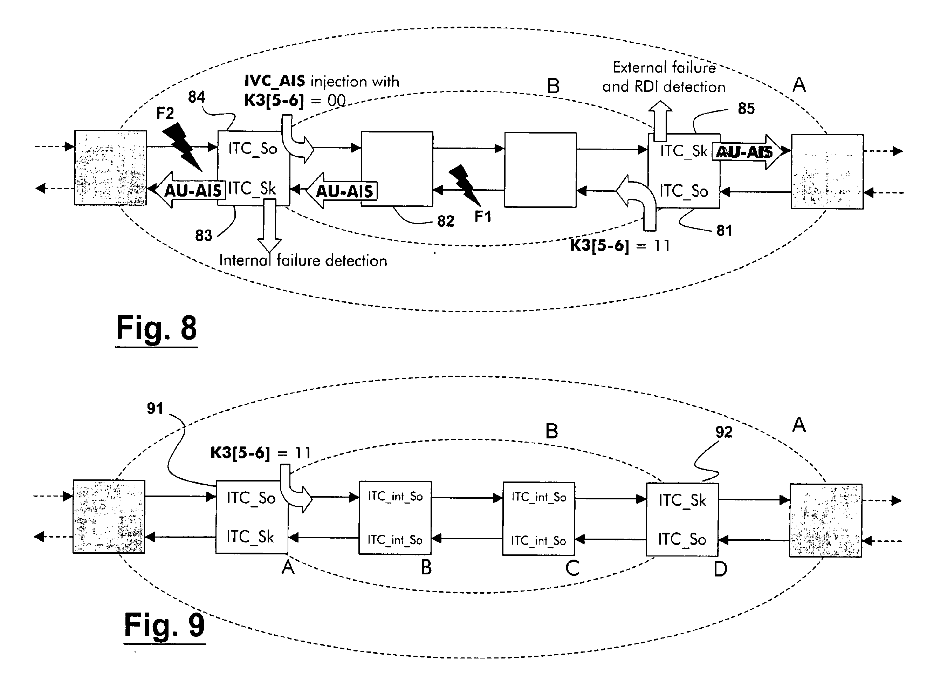

Wherein:
Signal Status # 1: no failure condition detected in ingress node (incoming normal signal / VC-AIS received) - see examples of Figures 4 and 5;
Signal Status # 2: Failure Detection in ingress node (external failure) - see example of Figure 6;
Signal Status # 3: Failure Detection in intermediate node (internal failure) - see example of Figure 7;
Signal Status # 4: Failure Detected in backward direction - see example of Figure 7; and
Signal Status # 5: Failure Detection in ingress node and failure detected in backward direction - see example of Figure 8.

In the examples of Figures 4-8 there are illustrated a number of signal status conditions for the network domain configuration of Figure 2a. For the purposes of clarity, the domains are schematically illustrated wherein only the nodes passed through by a path in question are shown. The gray network elements are those belonging to domain A and the white ones are those belonging to domain B. The Figures will be schematically explained through the corresponding reference signs.

With reference to Figure 4, a "no alarm condition" is illustrated.
41. During normal condition, (i.e. no SSF is detected in the ingress node of the domain to be monitored), K3[5-6] bits are overwritten to the value "11" (see Table 1).
42. The ITC_TT_Sk function detects no alarm conditions: no protection mechanism is triggered within the domain and no consequent action is performed.

With reference to Figure 5, a condition of external failure (namely a failure external to main domain A) with external TCM is illustrated.
51. Upon detection of an SSF condition, the standard TC_TT_So function generates a VC-AIS, carrying the incoming AIS indication. K3 [5-6] bits are overwritten to the value "11" according to Table 1 coding.
52. Internal TC_So behaves as if it were in normal conditions: K3 [5-6] bits are overwritten to the value "11" according to Table 1 coding.
53. Upon detection of C2 = "FF" and K3 [5-6] ="11", the ITC_TT_Sk function detects an incoming VC-AIS (i.e., normal condition): no protection mechanism is triggered within the domain B and no consequent action is performed.

With reference to Figure 6, a condition of failure external to domain B but internal to domain A is illustrated.
61. Upon detection of an SSF condition (incoming AIS), the ITC_TT_So function generates an internal VC-AIS carrying the indication of external failure, namely K3 [5-6] = "10".
62. Upon detection of C2 = "FF" and K3 [5-6] = 10, the ITC_TT_Sk function detects that an external failure occurred: no protection mechanism is triggered within the domain and an AU-AIS signal is generated to domain A end node.

With reference to Figure 7, a condition of internal failure, namely of failure internal to domain B, is illustrated.
71. Internal TC_So generates K3 [5-6] to "11" value.
72. The intermediate node detecting a failure condition generates an AU-AIS.
73. Upon detection of AU-AIS, the ITC_TT_Sk function detects an internal failure: the protection mechanism can be triggered within the domain and AU-AIS is regenerated. ITC_Sk reports to lTC_So that a failure was detected, in order to send RDI indication (i.e., K3 [5-6] = "01").
74. The ITC_TT_Sk function detects RDI indication carried over K3 [5-6].

Finally, with reference to Figure 8, a condition of external failure with backward failure is illustrated.
81. Starting from a "no failure condition", the internal TC_So generates K3 [5-6] to "11" value.
82. The intermediate node detecting a failure condition generates an AU-AIS.
83. The ITC_Sk of domain B reports to ITC_So that a failure was detected in order to send RDI indication.
84. Upon detection of an SSF condition (incoming AIS), the ITC_TT_So function generates an internal VC-AIS. As it is also present an RDI request, the code K3 [5-6] = "00" is injected.
85. Upon detection of C2 = "FF" and K3 [5-6] = "00", the ITC_TT_Sk function detects that an external failure occurred in the forward direction and an internal failure occurred in the backward direction. As a consequence, the protection mechanism is triggered within the domain and an AU-AIS signal is generated.

The above process can be further improved for managing fault localization by using similar concepts as above. Ingress and egress nodes to the domain to be monitored identify an internal TCM sublayer (ITCM); two new atomic functions are defined for sourcing and sinking the internal tandem connection, ITC_TT_So and ITC_TT_Sk, respectively; and a new maintenance signal is defined for maintenance operations within the ITC sublayer, such a new maintenance signal is termed Internal VC-AIS (briefly, IVC-AIS). The difference resides in the fact that intermediate nodes can generate Internal VC-AIS maintenance signal in case of a failure occurred internally to a domain, instead of injecting simply AU-AIS. A new atomic function (ITC_int_So) is defined for internal tandem connection management at the nodes that are intermediate in the domain.

In addition to the coding of bits 5-6 of K3, bits 1-4 of such a byte carry a node identifier indicating the node detecting a failure. Possibly, a multiframe arrangement could be provided for network domains comprising more than sexteen nodes.

A possible improved failure coding, including failure detection features, according to the present invention is given, by way of example only, in the following Table 2 and to the examples of Figures 9 - 14.

**Table 2**

| **Signal Status** | **Injected Maintenance Signal** | **K3 [5-6] Value** | **K3 [1-4] Value** | **Egress Node Consequent Action** | **Protection Trigger?** |
|---|---|---|---|---|---|
| 1 | No Consequent Action on payload | 11 | NA | No Consequent action | NO |
| 2 | **IVC-AIS** injected in Ingress Node | 10 | 1111 1 | **AU-AIS** | NO |
| 3 | **IVC-AIS** injected in intermediate node | 10 | Identifier of the node detecting the failure | **AU-AIS** | YES |
| 4 | No consequent action on payload | 01 | Identifier of the node detecting the failure | No Consequent Action | YES |
| 5 | **IVC-AIS** injected in intermediate node | 00 | Identifier of the node detecting the failure | **AU-AIS** | YES |
| 6 | IVC-AIS injected in ingress node | 00 | Identifier of the node detecting the failure | **AU-AIS** | YES |

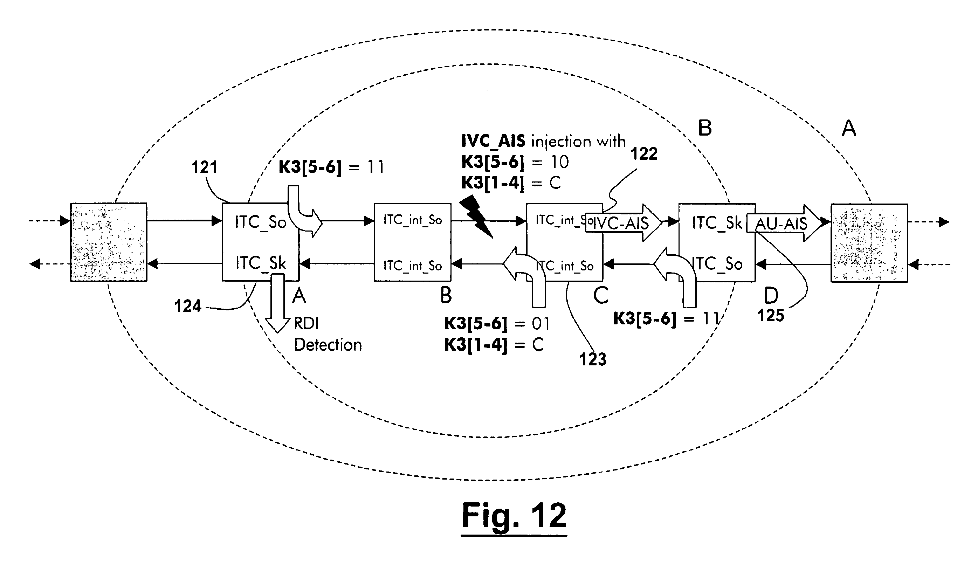

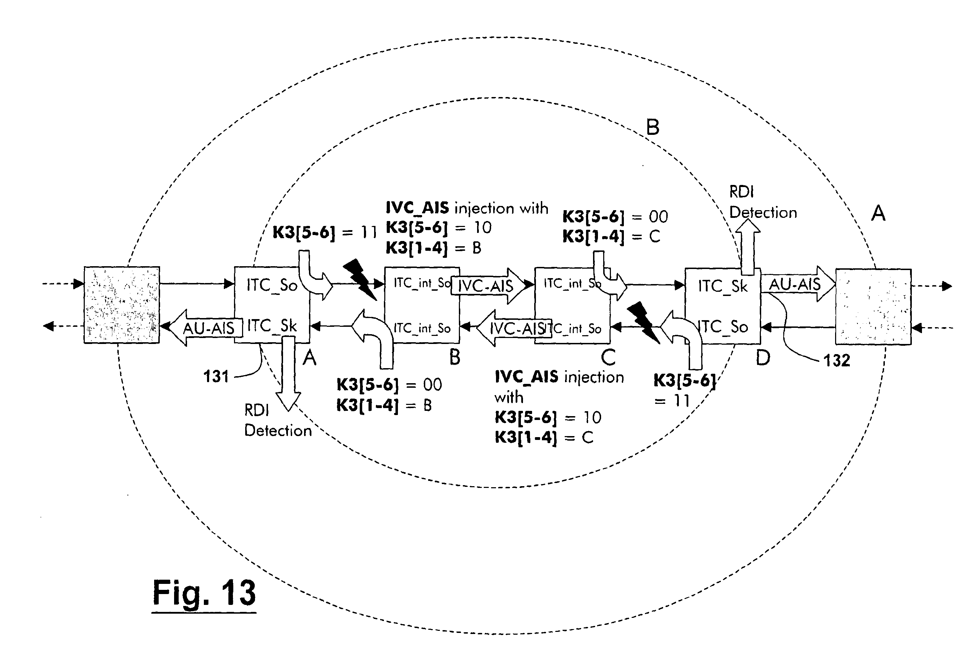

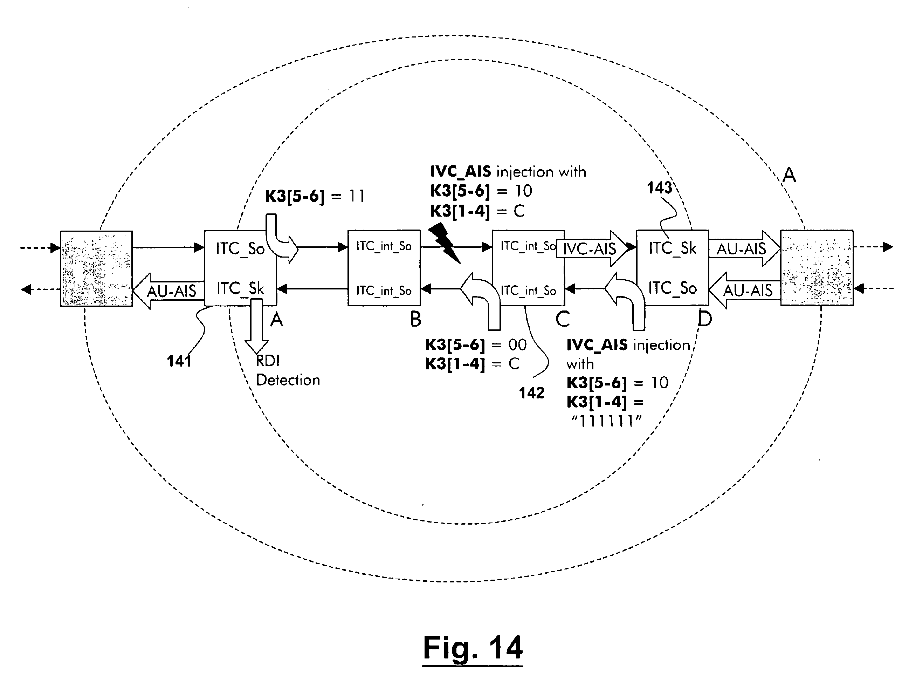

Wherein:
Signal Status # 1: no failure condition detected in ingress node (incoming normal signal / VC-AIS received) - see examples of Figures 9 and 10;
Signal Status # 2: Failure Detection in ingress node (external failure) - see example of Figure 11;
Signal Status # 3: Failure Detection in intermediate node (internal failure) - see example of Figure 12;
Signal Status # 4: Failure Detected in backward direction - see example of Figure 12;
Signal Status # 5: Failure Detection in intermediate node and failure detected in backward direction - see example of Figure 13; and
Signal Status # 6: Failure Detection in ingress node and failure detected in backward direction - see example of Figure 14.

Before starting to describe the mechanisms for failure detection according to the present invention, it should be remarked that each node belonging to domain B has a node identifier assigned. The identifier is inserted in bits 1-4 of K3 when generating internal VC-AIS. A number of identifier mapping procedures are possible but they will not described as they do not form a part of the present invention.

According to the present invention, ingress and egress nodes define the sublayer internal TC activating Internal Tandem Sk and So functions. The intermediate nodes manage Internal Tandem Connection So function.

With reference to Figure 9, a "no alarm condition" is illustrated.
91. During normal condition, (i.e. no SSF is detected in the ingress node of the domain to be monitored), K3[5-6] bits are overwritten to the value "11" (see Table 2).
92. The ITC_TT_Sk function detects no alarm conditions: no protection mechanism is triggered within the domain and no consequent action is performed.

With reference to Fig. 10, an external failure condition with external TCM is illustrated.
101. Upon detection of an SSF condition, the standard TC_TT_So function generates an VC-AIS, carrying the incoming AIS indication. K3[5-6] bits are set by definition to "11" value
102. Internal TC_So behaves as if it were in normal conditions: k3[5-6] bits are overwritten to the value "11"
103. Upon detection of C2 = "FF" and K3[5-6] = "11 ", the ITC_TT_Sk function detects an incoming VC-AIS (I.e. normal condition): no protection mechanism is triggered within the domain and no consequent action is performed.

With reference to Fig. 11, an external failure condition is illustrated.
111. Upon detection of an SSF condition (incoming AIS), the ITC_TT_So function generates an internal VC-AIS, carrying the indication of detected failure (K3[5-6] = "10") at ingress node (K3[1-4] = "1111 ").
112. Upon detection of C2 = "FF" and K3[5-6] = "10" and K3[1-4] = "1111 ", the ITC_TT_Sk function detects that an external failure occurred: no protection mechanism is triggered within the domain and an AU-AIS signal is generated.

With reference to Fig. 12, an internal failure condition is illustrated.
121. Internal TC_So generates K3[5-6] to "11" value.Node C, detecting a failure, generates IVC_AIS carrying the indication of detected failure (K3[5-6] = "10") at its input (K3[1-4] = C) and generates RDI indication to be inserted.
123. Node C, in backward direction, insert a Remote Defect Indication (K3[5-6] = "01") detected at node C (K3[1-4] = C).
124. The ITC_TT_Sk function detects RDI indication carried over K3[5-6], indicating that a failure occurred between nodes B and C: possibly a protection mechanism is triggered within the network domain B.
125. Upon detection of IVC-AIS, the ITC_TT_Sk function detects an internal failure occurred before node C: the possible protection mechanism is triggered within the domain and AU-AIS is regenerated.

With reference to Fig. 13, an internal failure condition with backward failure is illustrated.
131. ITC_Sk in node A detects both remote and forward defect indication. With the received node identifier it is possible to state that the failure occurred before node B in forward direction and between A and D in backward direction.
132. ITC_Sk in node D detects both remote and forward defect indication. With the received node identifier it is possible to state that the failure occurred before node C in forward direction and between D and A in backward direction.

Finally, with reference to Fig. 14, an external failure condition with backward failure is illustrated.
141. The ITC_TT_Sk function detects RDI indication and failure carried over K3[5-6], indicating that a failure occurred between nodes B and C.
142. ITC_Sk in node D detects forward defect indication. With the received node identifier it is possible to state that the failure occurred before node C in forward direction and between D and A in backward direction.
143. Node C, in backward direction, insert a Remote Defect Indication (K3[5-6] = "00") detected at node C (K3[1-4] = C) to be added to the failure indication.

It has now become clear that the new solution solves the problem of fault detection / fault localization in network with nested domains, optimizing network element response with respect to the use of control plane.

There have thus been shown and described a novel method and a novel frame which fulfill all the objects and advantages sought therefore. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the scope of the invention are deemed to be covered by the invention which is limited only by the claims which follow.

## Claims

1. A method for in-band detecting and localizing a failure of a path (PATH) in a SDH network,
wherein the SDH network comprises a first network domain (A) and at least one further network domain (B, C),
wherein said at least one further network domain (B, C) is nested into said first network domain (A),
wherein said path (PATH) passes through both said first network domain (A) and said at least one further network domain (B, C),
wherein SDH frames are transmitted through said path (PATH), each frame comprising a Path OverHead, POH, and a payload, the Path OverHead comprising a K3 byte,
wherein the method is **characterized by**
- encoding first to fourth bits of K3 byte so that they carry a node identifier indicating a node detecting a failure,
- encoding a fifth bit and a sixth bit of K3 byte so that they comprise Remote Defect Indication information and information relating to the fact that said failure is external or internal to said first network domain (A) or said at least one further network domain (B, C).

2. The method according to claim 1, wherein both the fifth and sixth bits of the byte K3 are coded according to the following coding:
- 11: no failure condition detected in ingress node and no consequent action is taken on payload;
- 10: external failure, namely a failure is detected in ingress node or a domain; an internal VC-AIS is injected in ingress node;
- 01: failure Detected in backward direction; no consequent action is taken on payload; and
- 00: failure Detected in ingress node and failure detected in backward direction; an internal VC-AIS is injected in ingress node.

3. The method according to any of the previous claims, wherein it further comprises multiframing the node identifier indicating the node detecting the failure for supporting a network domain comprising more than sixteen nodes.

4. A SDH frame for in-band detecting and localizing a failure of a path (PATH) in a SDH network,
wherein the frame comprises a Path OverHead, POH, and a payload, the Path OverHead comprising a K3 byte,
wherein the SDH network comprises a first network domain (A) and at least one further network domain (B, C),
wherein said at least one further network domain (B, C) is nested into said first network domain (A),
wherein said path (PATH) passes through both said first network domain (A) and said at least one further network domain (B, C),
wherein said SDH frame is transmitted through said path (PATH),
**characterized in that**
- the first to fourth bits of K3 byte are encoded so that they carry a node identifier indicating a node detecting a failure,
- the fifth bit and the sixth bit of said K3 byte are encoded so that they comprise Remote Defect Indication information and information relating to the fact that said failure is external or internal to said first network domain (A) or said at least one further network domain (B, C).

5. The frame according to claim 4, wherein both the fifth and sixth bits of the said byte K3 are coded according to the following coding:
- 11: no failure condition detected in ingress node and no consequent action is taken on payload;
- 10: external failure, namely a failure is detected in ingress node or a domain; an internal VC-AIS is injected in ingress node;
- 01: failure Detected in backward direction; no consequent action is taken on payload; and
- 00: failure Detected in ingress node and failure detected in backward direction; an internal VC-AIS is injected in ingress node.

6. A network element for a SDH network configured for in-band detecting and localizing a failure of a path (PATH) in said SDH network,
wherein the SDH network comprises a first network domain (A) and at least one further network domain (B, C),
wherein said at least one further network domain (B, C) is nested into said first network domain (A),
wherein said path (PATH) passes through both said first network domain (A) and said at least one further network domain (B, C),
wherein SDH frames are transmitted through said path (PATH),
wherein said network element is **characterized by** encoding means which are configured for:
- encoding first to fourth bits of K3 byte so that they carry a node identifier indicating a node detecting a failure,
- encoding a fifth bit and a sixth bit of K3 byte so that they comprise Remote Defect Indication information and information relating to the fact that said failure is external or internal to said first network domain (A) or said at least one further network domain (B, C), and
wherein the SDH network comprises at least a further similar network element.

7. A SDH network configured for in-band detecting and localizing a failure of a path (PATH),
wherein the SDH network comprises a first network domain (A) and at least one further network domain (B, C),
wherein said at least one further network domain (B, C) is nested into said first network domain (A),
wherein said path (PATH) passes through both said first network domain (A) and said at least one further network domain (B, C),
wherein SDH frames are transmitted through said path (PATH), each frame comprising a Path OverHead, POH, and a payload, the Path OverHead comprising a K3 byte,
**characterized by** encoding means which are configured for:
- encoding first to fourth bits of K3 byte so that they carry a node identifier indicating a node detecting a failure,
- encoding a fifth bit and a sixth bit of K3 byte so that they comprise Remote Defect Indication information and information relating to the fact that said failure is external or internal to said first network domain (A) or said at least one further network domain (B, C).

## Patentansprüche

1. Verfahren zur Inband-Erkennung und -Lokalisierung eines Ausfalls eines Path (PATH) in einem SDH-Netzwerk,
wobei das SDH-Netzwerk eine erste Netzwerkdomäne (A) und wenigstens eine weitere Netzwerkdomäne (B, C) umfasst,
wobei die wenigstens eine weitere Netzwerkdomäne (B, C) in die erste Netzwerkdomäne (A) geschachtelt ist,
wobei der Path (PATH) durch sowohl die erste Netzwerkdomäne (A) und die wenigstens eine weitere Netzwerkdomäne (B, C) hindurch geht,
wobei SDH-Rahmen über den Path (PATH) übertragen werden, wobei jeder Pfad einen Path-Overhead, POH, und Nutzdaten umfasst, wobei der Path-Overhead ein K3-Byte umfasst,
wobei das Verfahren **gekennzeichnet ist durch**
- Codieren der ersten bis vierten Bits des K3-Bytes, so dass sie einen Knotenidentifikator tragen, der einen Knoten angibt, der einen Ausfall erkennt,
- Codieren eines fünften und eines sechsten Bits des K3-Bytes, so dass sie Information zur Angabe eines entfernten Fehlers und Information umfassen, die sich auf die Tatsache beziehen, dass der Ausfall außerhalb oder innerhalb der ersten Netzwerkdomäne (A) oder der wenigstens einen weiteren Netzwerkdomäne (B, C) liegt.

2. Verfahren nach Anspruch 1, bei dem sowohl die fünften als auch die sechsten Bits des Bytes K3 entsprechend der folgenden Codierung codiert sind:
- 11: Zustand ohne Fehler, erkannt beim Eingangsknoten, und es wird keine folgende Aktion an den Nutzdaten vorgenommen;
- 10: externer Fehler, nämlich es wird ein Fehler am Eingangsknoten oder einer Domain erkannt; ein internes VC-AIS wird in den Eingangsknoten eingespeist;
- 01: Ausfall in Rückwärtsrichtung erkannt; es wird keine Aktion an den Nutzdaten vorgenommen; und
- 00: Ausfall im Eingangsknoten erkannt und Ausfall in Rückwärtsrichtung erkannt; es wird ein internes VC-AIS im Eingangsknoten eingespeist.

3. Verfahren nach einem der vorherigen Ansprüche, wobei es ferner das Mehrfachrahmen des Knotenidentifikators umfasst, der den Knoten angibt, der den Ausfall erkennt, um eine Netzwerkdomäne zu unterstützen, die mehr als sechzehn Knoten umfasst.

4. SDH-Rahmen zur Inband-Erkennung und -Lokalisierung eines Ausfalls eines Path (PATH) in einem SDH-Netzwerk,
wobei der Rahmen einen Path-Overhead, POH, und Nutzdaten umfasst, wobei der Path-Overhead ein K3-Byte umfasst,
wobei das SDH-Netzwerk eine erste Netzwerkdomäne (A) und wenigstens eine weitere Netzwerkdomäne (B, C) umfasst,
wobei die wenigstens eine weitere Netzwerkdomäne (B, C) in die erste Netzwerkdomäne (A) geschachtelt ist,
wobei der Path (PATH) durch sowohl die erste Netzwerkdomäne (A) und die wenigstens eine weitere Netzwerkdomäne (B, C) hindurch geht,
wobei der SDH-Rahmen über den Path (PATH) übertragen wird,
**dadurch gekennzeichnet, dass**
- die ersten bis vierten Bits des K3-Bytes codiert werden, so dass sie einen Knotenidentifikator tragen, der einen Knoten angibt, der einen Ausfall erkennt,
- das fünfte und das sechste Bit des K3-Bytes codiert werden, so dass sie Information zur Angabe eines entfernten Fehlers und Information umfassen, die sich auf die Tatsache beziehen, dass der Ausfall außerhalb oder innerhalb der ersten Netzwerkdomäne (A) oder der wenigstens einen weiteren Netzwerkdomäne (B, C) liegt.

5. Rahmen nach Anspruch 4, bei dem sowohl die fünften als auch die sechsten Bits des Bytes K3 entsprechend der folgenden Codierung codiert sind:
- 11: Zustand ohne Fehler, erfasst beim Eingangsknoten und es wird keine folgende Aktion an den Nutzdaten vorgenommen;
- 10: externer Fehler, nämlich es wird ein Fehler am Eingangsknoten oder einer Domain erfasst; ein internes VC-AIS wird in den Eingangsknoten eingespeist;
- 01: Ausfall in Rückwärtsrichtung entdeckt; es wird keine Aktion an den Nutzdaten vorgenommen; und
- 00: Ausfall im Eingangsknoten erfasst und Ausfall in Rückwärtsrichtung erfasst; es wird ein internes VC-AIS im Eingangsknoten eingespeist.

6. Netzwerkelement für ein SDH-Netzwerk, das zur Inband-Erkennung und -Lokalisierung eines Ausfalls eines Path (PATH) in dem SDH-Netzwerk konfiguriert ist,
wobei das SDH-Netzwerk eine erste Netzwerkdomäne (A) und wenigstens eine weitere Netzwerkdomäne (B, C) umfasst,
wobei die wenigstens eine weitere Netzwerkdomäne (B, C) in die erste Netzwerkdomäne (A) geschachtelt ist,
wobei der Path (PATH) durch sowohl die erste Netzwerkdomäne (A) und die wenigstens eine weitere Netzwerkdomäne (B, C) hindurch geht,
wobei SDH-Rahmen über den Path (PATH) übertragen werden,
wobei das Netzwerkelement durch Codiermittel **gekennzeichnet** ist, die konfiguriert sind zum:
- Codieren der ersten bis vierten Bits des K3-Bytes, so dass sie einen Knotenidentifikator tragen, der einen Knoten angibt, der einen Ausfall erkennt,
- Codieren eines fünften und eines sechsten Bits des K3-Bytes, so dass sie Information zur Angabe eines entfernten Fehlers und Information umfassen, die sich auf die Tatsache beziehen, dass der Ausfall außerhalb oder innerhalb der ersten Netzwerkdomäne (A) oder der wenigstens einen weiteren Netzwerkdomäne (B, C) liegt, und
wobei das SDH-Netzwerk wenigstens ein weiteres ähnliches Netzwerkelement umfasst.

7. SDH-Netzwerk, das zur Inband-Erkennung und - Lokalisierung eines Ausfalls eines Path (PATH) konfiguriert ist,
wobei das SDH-Netzwerk eine erste Netzwerkdomäne (A) und wenigstens eine weitere Netzwerkdomäne (B, C) umfasst,
wobei die wenigstens eine weitere Netzwerkdomäne (B, C) in die erste Netzwerkdomäne (A) geschachtelt ist,
wobei der Path (PATH) durch sowohl die erste Netzwerkdomäne (A) und die wenigstens eine weitere Netzwerkdomäne (B, C) hindurch geht,
wobei SDH-Rahmen über den Path (PATH) übertragen werden, wobei jeder Pfad einen Path-Overhead, POH, und Nutzdaten umfasst, wobei der Path-Overhead ein K3-Byte umfasst,
**gekennzeichnet durch** Codiermittel, die konfiguriert sind zum:
- Codieren der ersten bis vierten Bits des K3-Bytes, so dass sie einen Knotenidentifikator tragen, der einen Knoten angibt, der einen Ausfall erkennt,
- Codieren eines fünften und eines sechsten Bits des K3-Bytes, so dass sie Information zur Angabe eines entfernten Fehlers und Information umfassen, die sich auf die Tatsache beziehen, dass der Ausfall außerhalb oder innerhalb der ersten Netzwerkdomäne (A) oder der wenigstens einen weiteren Netzwerkdomäne (B, C) liegt.

## Revendications

1. Procédé pour la détection et la localisation dans la bande d'une faute de chemin (PATH) dans un réseau SDH,
dans lequel le réseau SDH comprend un premier domaine de réseau (A) et au moins un autre domaine de réseau (B, C),
dans lequel ledit au moins un autre domaine de réseau (B, C) est intégré dans ledit premier domaine de réseau (A),
dans lequel ledit chemin (PATH) passe à travers les deux dudit premier domaine de réseau (A) et dudit au moins un autre domaine de réseau (B, C),
dans lequel des trames SDH sont transmises sur ledit chemin (PATH), chaque trame comprenant un surdébit de chemin - POH - et une charge utile, le surdébit de chemin comprenant un octet K3,
dans lequel, le procédé est **caractérisé par** les étapes consistant à :
- coder les bits un à quatre de l'octet K3 de façon à ce qu'ils transportent un identificateur de noeud indiquant un noeud qui détecte une faute,
- coder un cinquième bit et un sixième bit de l'octet K3 de façon à ce qu'ils comprennent des informations d'indication de défaut à distance ainsi que des informations relatives au fait que ladite faute est externe ou interne audit premier domaine de réseau (A) ou audit au moins un autre domaine de réseau (B, C).

2. Procédé selon la revendication 1, dans lequel le cinquième et le sixième bits de l'octet K3 sont tous les deux codés conformément au codage suivant :
- 11 : aucune condition de faute n'est détectée dans un noeud d'entrée, et aucune action n'est prise en conséquence sur la charge utile ;
- 10 : faute externe ; plus précisément une faute est détectée dans un noeud d'entrée ou un domaine ; un VC-AIS interne est injecté dans le noeud d'entrée ;
- 01 : une faute est détectée dans la direction vers l'arrière ; aucune action n'est prise en conséquence sur la charge utile ; et
- 00 : une faute est détectée dans un noeud d'entrée, et une faute est détectée dans la direction vers l'arrière ; un VC-AIS interne est injecté dans le noeud d'entrée.

3. Procédé selon l'une quelconque des revendications précédentes, dans lequel le procédé comprend en outre l'étape consistant à gérer en trames multiples l'identifiant de noeud indiquant le noeud qui détecte la faute pour prendre en charge un domaine de réseau comprenant plus de seize noeuds.

4. Trame SDH pour la détection et la localisation dans la bande d'une faute de chemin (PATH) dans un réseau SDH,
dans laquelle la trame comprend un surdébit de chemin - POH - et une charge utile, le surdébit de chemin comprenant un octet K3,
dans laquelle le réseau SDH comprend un premier domaine de réseau (A) et au moins un autre domaine de réseau (B, C),
dans laquelle ledit au moins un autre domaine de réseau (B, C) est intégré dans ledit premier domaine de réseau (A),
dans laquelle ledit chemin (PATH) passe à travers les deux dudit premier domaine de réseau (A) et dudit au moins un autre domaine de réseau (B, C),
dans laquelle ladite trame SDH est transmise sur ledit chemin (PATH), **caractérisée en ce que** :
- les bits un à quatre de l'octet K3 sont codés de façon à transporter un identificateur de noeud indiquant un noeud qui détecte une faute,
- le cinquième bit et le sixième bit de l'octet K3 sont codés de façon à comprendre des informations d'indication de défaut à distance ainsi que des informations relatives au fait que ladite faute est externe ou interne audit premier domaine de réseau (A) ou audit au moins un autre domaine de réseau (B, C).

5. Trame selon la revendication 4, dans laquelle le cinquième et le sixième bit de l'octet K3 sont tous les deux codés conformément au codage suivant :
- 11 : aucune condition de faute n'est détectée dans un noeud d'entrée, et aucune action n'est prise en conséquence sur la charge utile ;
- 10 : faute externe; plus précisément une faute est détectée dans un noeud d'entrée ou un domaine ; un VC-AIS interne est injecté dans le noeud d'entrée ;
- 01 : une faute est détectée dans la direction vers l'arrière ; aucune action n'est prise en conséquence sur la charge utile ; et
- 00 : une faute est détectée dans un noeud d'entrée, et une faute est détectée dans la direction vers l'arrière ; un VC-AIS interne est injecté dans le noeud d'entrée.

6. Élément de réseau pour un réseau SDH configuré pour la détection et la localisation dans la bande d'une faute de chemin (PATH) dans ledit réseau SDH,
dans lequel le réseau SDH comprend un premier domaine de réseau (A) et au moins un autre domaine de réseau (B, C),
dans lequel ledit au moins un autre domaine de réseau (B, C) est intégré dans ledit premier domaine de réseau (A),
dans lequel ledit chemin (PATH) passe à travers les deux dudit premier domaine de réseau (A) et dudit au moins un autre domaine de réseau (B, C),
dans lequel des trames SDH sont transmises sur ledit chemin (PATH), dans lequel ledit élément de réseau est **caractérisé par** des moyens de codage qui sont configurés pour :
- coder les bits un à quatre de l'octet K3 de façon à ce qu'ils transportent un identificateur de noeud indiquant un noeud qui détecte une faute,
- coder un cinquième bit et un sixième bit de l'octet K3 de façon à ce qu'ils comprennent des informations d'indication de défaut à distance ainsi que des informations relatives au fait que ladite faute est externe ou interne audit premier domaine de réseau (A) ou audit au moins un autre domaine de réseau (B, C), et
dans lequel le réseau SDH comprend au moins un autre élément de réseau similaire.

7. Réseau SDH configuré pour la détection et la localisation dans la bande d'une faute de chemin (PATH),
dans lequel le réseau SDH comprend un premier domaine de réseau (A) et au moins un autre domaine de réseau (B, C),
dans lequel ledit au moins un autre domaine de réseau (B, C) est intégré dans ledit premier domaine de réseau (A),
dans lequel ledit chemin (PATH) passe à travers les deux dudit premier domaine de réseau (A) et dudit au moins un autre domaine de réseau (B, C),
dans lequel des trames SDH sont transmises sur ledit chemin (PATH), chaque trame comprenant un surdébit de chemin - POH - et une charge utile, le surdébit de chemin comprenant un octet K3, **caractérisé par** des moyens de codage qui sont configurés pour :
- coder les bits un à quatre de l'octet K3 de façon à ce qu'ils transportent un identificateur de noeud indiquant un noeud qui détecte une faute,
- coder un cinquième bit et un sixième bit de l'octet K3 de façon à ce qu'ils comprennent des informations d'indication de défaut à distance ainsi que des informations relatives au fait que ladite faute est externe ou interne audit premier domaine de réseau (A) ou audit au moins un autre domaine de réseau (B, C).
